# EUROPÄISCHE PATENTSCHRIFT

(11) **EP 0 748 766 B1**
(45) Veröffentlichungstag und Bekanntmachung des Hinweises auf die Patenterteilung: **21.10.1998**
(21) Anmeldenummer: 96109465.3
(22) Anmeldetag: 13.06.1996
(51) Int. Cl.: C01F 11/18, B01D 53/50, B01D 53/68, B01D 53/70, B01D 53/64, B01J 20/04, B01J 20/20, C02F 1/28

(54) **Granulat auf Basis von Erdalkalikarbonaten mit ab- und adsorptiven Substanzen**
Alkaline-earth metal carbonate based granulate with ab- or adsorptive compounds
Granulate à base de carbonates des métaux alcalino-terreux contenant des composées ad- ou absorbants

(30) Priorität: 16.06.1995 DE 19521808
(43) Veröffentlichungstag der Anmeldung: 18.12.1996
(73) Patentinhaber: Rheinische Kalksteinwerke GmbH & Co. KG, 42489 Wülfrath (DE)
(72) Erfinder: Sindram, Martin, Dipl.-Ing., 58256 Ennepetal (DE); Webeling, Michael, Chem.-Ing., 42489 Wülfrath (DE)

(56) Entgegenhaltungen:
- EP-A- 0 293 855
- EP-A- 0 405 290
- EP-A- 0 479 350
- EP-A- 0 497 214
- DATABASE WPI Section Ch, Week 8649 Derwent Publications Ltd., London, GB; Class D15, AN 86-322106 XP002014880 & JP-A-61 238 393 (HITACHI KK) , 23.Oktober 1986
- PATENT ABSTRACTS OF JAPAN vol. 013, no. 447 (C-642), 6.Oktober 1989 & JP-A-01 171661 (TAIHO IND CO LTD), 6.Juli 1989,

## Beschreibung

Die Erfindung betrifft ein Granulat auf Basis von Erdalkalikarbonaten mit einem Bindemittel, das durch Rekarbonatisierung von Erdalkalihydroxid entsteht, sowie ein Verfahren zur Herstellung des Granulats und seine Verwendung.

Solche Granulate sind aus der europäischen Patentanmeldung EP-A-293 855 bekannt. Die hochreaktiven Granulate zeichnen sich durch eine hohe offene Porosität und große spezifische Oberfläche aus. Sie werden vorteilhaft in Schüttschichtfiltern zur Abscheidung von sauren Bestandteilen von Abgasen, insbesondere Fluorwasserstoff (HF), Schwefeloxide (SOₓ) und Chlorwasserstoff (HCl) eingesetzt. Vorteilhaft für den Einsatz in Filtern ist auch, daß bei den Granulaten aufgrund des aus EP-A-293 855 bekannten Herstellungsverfahrens die Druckfestigkeit je nach Verwendungszweck einstellbar ist.

Besonders vorteilhaft ist der Einsatz der Granulate in der grob- und feinkeramischen Industrie zur Abscheidung von HF, HCl und SOₓ aus Ofenabgasen. Gegenüber Kalksteinsplitt, der nur an der Oberfläche reagiert, weisen die Granulate verbesserte Reaktionsfähigkeit auf. Aufgrund der einstellbaren Porosität kann für verschiedene Einsatzzwecke erreicht werden, daß das Granulat während einer Filterreise vollständig ausreagiert. Wegen der hohen spezifischen Wirksamkeit verringert sich dabei die zu entsorgende Reststoffmenge, soweit nicht das eingesetzte Material einer Wiederverwendung zugeführt werden kann.

Ausgangsmaterial kann Kalkstein oder Dolomitstein sein.

Die daraus hergestellten basischen karbonatischen Granulate (Kalkgranulate) sind hervorragend geeignet für die Abscheidung von sauren Bestandteilen aus Gasen und Abgasen. Häufig müssen aber auch organische Bestandteile und flüchtige Schwermetalle abgeschieden werden. Als wirksame Reinigungsmaterialien sind dafür beispielsweise Aktivkokse, Zeolithe, Schwefel und schwefelhaltige Substanzen bekannt. "Aktivkoks" wird dabei als Bezeichnung verwendet für alle Produkte, die durch eine Verschwelung von Kohlen oder Torf oder anderen verkokbaren Stoffen gewonnen werden und eine große innere Oberfläche aufweisen. Das aus der nachfolgenden Aktivierung, zum Beispiel durch Wasserdampf, gewonnene Produkt wird allgemein als Aktivkohle bezeichnet, das im Herdofenprozeß aus Braunkohle gewonnene Produkt wird als Braunkohlenherdofenkoks bezeichnet.

Anlagentechnisch aufwendig und schwierig zu betreiben wäre die Hintereinanderschaltung von getrennten Einheiten jeweils für die Abscheidung von sauren Bestandteilen mit Kalkgranulaten einerseits und für die Abscheidung organischer Bestandteile und Schwermetalle mit z. B. ad- oder absorptiv wirkenden Stoffen wie Aktivkoksen oder Zeolithen andererseits. Dabei besteht die Gefahr, daß der Aktivkoks versottet. Die Schüttung muß durch kontinuierlichen Austrag in Bewegung gehalten werden. Dabei muß der Durchsatz vergleichsweise größer eingestellt werden als für die gewünschte Schadstoffabscheidung erforderlich.

Die Lösung gelingt auch nicht durch das Vermischen von Kalksteinsplitt bzw. Kalkgranulaten mit ad- oder absorptiv wirkenden Stoffen, wie zum Beispiel Aktivkoksen als Formkoks, und Beschickung der Schüttschichtfilter mit dieser Mischung. Bei der erforderlichen intensiven Vermengung eines solchen Gemisches zur Homogenisierung entsteht erheblicher Abrieb. Dabei ist die Gefahr einer Konzentrationsverschiebung gegeben, die zu kohlenstoffangereicherten Fraktionen führen kann. Da die Schüttung üblicherweise aus Körnungen im Bereich von ca. 2 bis 6 mm besteht, ist nicht mehr sichergestellt, daß die Abgase gleichmäßig mit den Kalkgranulaten und der Aktivkokskomponente in Kontakt treten. Hierdurch wird die Effektivität des Verfahrens stark herabgesetzt. Dies ließe sich nur durch eine erhebliche Vergrößerung der durchströmten Schüttung umgehen. Der Einsatz eines solchen Materials in bereits bestehenden Schüttschichtfilteranlagen, die in ihrer Bauart festgelegt sind, würde die Effektivität der in diesen Anlagen bisher durchgeführten Abscheidung von sauren Schadstoffen beeinträchtigen.

Zur Vermeidung von Versottung der Filterschüttung müßte die Austragsmenge, das heißt der Verbrauch an Material, bei Einsatz eines Genisches auf die Aufnahme von Wasser und von Schwefelverbindungen an den eingesetzten Aktivkoksen ausgerichtet werden. Dieses bedeutet einen erheblichen Mehrverbrauch.

Bei Einsatz von Gemischen aus Kalkgranulat und Aktivkoksen oder Kalksteinsplitt und Aktivkoksen besteht wegen des Aktivkoksabriebs und der Neigung zur Entmischung immer die Gefahr der Bildung von Brandherden. Daher müssen Anlagen, die mit solchen Mischungen betrieben werden, den erhöhten sicherheitstechnischen Anforderungen genügen, was erhebliche Mehrkosten mit sich bringt.

Ähnliche Einwände gelten auch für den in EP-A-0 479 350 vorgeschlagenen Einsatz von Aktivkohle im Wirbelschichtreaktor mit Kalziumkarbonat als Additiv.

Für die Wasseraufbereitung ist aus DATABASE WPI, AN: 86-322106 und JP-A-61 238 393 ein Mittel bekannt, das aus Aktivkohlepartikeln mit einer durch Rekarbonatisierung von Erdalkalihydroxiden erhaltenen Karbonatschicht besteht. Dabei wird die adsorptive Wirkung der Aktivkohle aber erst in dem Umfang wirksam, wie die Bestandteile der mineralischen Schicht an das Wasser abgegeben werden.

Der Erfindung liegt daher die Aufgabe zugrunde, die eingangs genannten Kalkgranulate so zu modifizieren, daß neben der Abscheidung von sauren Schadstoffen die gleichzeitige Abscheidung von organischen Stoffen, wie Dioxinen und Furanen sowie Schwermetallen in einem anlagentechnisch einfachen Verfahrensschritt möglich wird.

Dies wird dadurch erreicht, daß adsorptiv und/oder absorptiv wirkende Zusätze feinverteilt in die Matrix eingebunden sind.

Ein Verfahren zur Herstellung der Granulate kann dadurch gekennzeichnet sein, daß vor der Rekarbonatisierung beim Vermischen der feinkörnigen karbonatischen Ausgangsstoffe mit dem Erdalkalihydroxid und Wasser zusätzlich absorptiv und/oder adsorptiv wirkende Zusätze zugesetzt werden.

Eine vorteilhafte Ausgestaltung des Verfahrens besteht darin, zunächst ein Granulat aus Kalksteinmehl und Kalkhydrat zu formen und in einem zweiten Schritt um diesen Kern eine Schicht aus Erdalkalikarbonat, Erdalkalihydroxid und ab- oder adsorptionsfördernden Zusätzen aufzubringen und anschließend zu karbonatisieren.

Diese zweite Schicht kann in ihrer Stärke so angepaßt werden, daß eine optimale Ausnutzung der Reinigungswirkung für saure und andere Bestandteile des Abgases erreicht wird, insbesondere kann der Anteil an relativ teuren Zusätzen wie Aktivkoksen oder Zeolithen verringert werden.

Nachfolgend wird die Erfindung an einem Beispiel erläutert:

Ausgehend von 490 kg Kalksteinmehl 20/90, d. h. mit einer Mahlfeinheit von 20 % Rückstand auf einem Sieb mit 90 µm Maschenweite, 160 kg Weißkalkhydrat und 32,5 kg Aktivkohlenstaub bzw. Braunkohlenkoksstaub werden zunächst die Trockenstoffe eine Minute intensiv homogenisiert und anschließend mit der erforderlichen Wassermenge versetzt. Die Granulierzeit beträgt etwa fünf Minuten. Abhängig von der Aktivkokskomponente werden etwa 115 bis 130 kg Wasser zugegeben. Die Rekarbonatisierung auf dem Fließbett erfolgt beispielsweise bei einer Temperatur des Trocknungs- und Karbonatisierungsgases von 250 °C bei einem Volumenanteil an CO₂ von 15 bis 20 % und einer Verweilzeit auf dem Fließbett von ca. 20 Minuten.

Die so hergestellten kohlenstoffhaltigen Granulate weisen eine Porosität von ca. 33 bis 40 % auf.

Es ist auch möglich anstelle der aus EP 293 855 bekannten Mischergranulation eine Aufbaugranulation durchzuführen. Damit kann eine Zweiphasengranalie hergestellt werden, bei der der Kern nur aus Kalkkomponenten besteht und nur eine äußere Schicht die ab- oder adsorptiven Zusätze enthält.

Da bei dem erfindungsgemäßen Granulat die wirksamen Komponenten zur Ad- und Absorption fest eingebunden und feinverteilt in der Matrix der Granalien vorliegen, hat jedes einzelne Korn der Schüttung sowohl adsorptive wie auch absorptive Eigenschaften, die durch entsprechend gewählte Parameter beim Herstellungsverfahren gezielt verändert werden können.

Der beim Umschlag und Einsatz des erfindungsgemäßen Granulats in den zur Abgasreinigung genutzten Schüttschichtfiltern entstehende Abrieb kann sicherheitstechnisch unbedenklich ausgestaltet werden, da der Abrieb immer Erdalkalikarbonat enthält und nicht staubexplosionsfähig ist.

Da durch das erfindungsgemäße Herstellungsverfahren die Härte der Granalien durch Wahl des Bindemittelanteils und den Rekarbonatisierungsgrad einstellbar ist, kann einerseits genügende Stabilität für Transport, Lagerung und Einsatz sichergestellt werden. Andererseits kann das Material auch für eine gegebenenfalls mögliche Weiterverwertung als Rohstoff, zum Beispiel bei der Produktion von Hintermauerziegeln ohne großen Energieaufwand wieder zerkleinert werden.

Das erfindungsgemäße Granulat kann auch in Schüttschichtfiltern für die Wasseraufbereitung Verwendung finden.

## Patentansprüche

1. Granulat auf Basis von Erdalkalikarbonaten mit einem Bindemittel, das durch Rekarbonatisierung von Erdalkalihydroxid entsteht, dadurch gekennzeichnet, daß hinsichtlich organischer Stoffe, wie Dioxine und Furane sowie Schwermetallen adsorptiv und/oder absorptiv wirkende Zusätze feinverteilt in die Matrix eingebunden sind.

2. Verfahren zur Herstellung eines Granulats nach Anspruch 1, dadurch gekennzeichnet, daß vor der Rekarbonatisierung beim Vermischen der feinkörnigen karbonatischen Ausgangsstoffe mit dem Erdalkalihydroxid und Wasser zusätzlich absorptiv und/oder adsorptiv wirkende Zusätze zugesetzt werden.

3. Verfahren nach Anspruch 2, dadurch gekennzeichnet, daß zunächst ein Granulat aus Erdalkalikarbonaten und Erdalkalihydroxid geformt wird und in einem zweiten Schritt um diesen Kern eine Schicht aus Erdalkalikarbonat, Erdalkalihydroxid und ab- oder adsorptionsfördernden Zusätzen aufgebracht wird und anschließend rekarbonatisiert wird.

4. Verfahren nach Anspruch 2 oder 3, dadurch gekennzeichnet, daß die Härte der Granalien eingestellt wird.

5. Verwendung des Granulates nach Anspruch 1 für Zwecke der Gas- und Abgasreinigung.

6. Verwendung des Granulates nach Anspruch 1 für die Wasseraufbereitung.

## Claims

1. A granular material based on alkaline earth carbonates, comprising a binder which is formed by the reconversion of alkaline earth hydroxide into carbonate, characterised in that additives having an adsorptive and/or absorptive effect with regard to organic substances such as dioxins and furanes, and with regard to heavy metals, are bonded in finely distributed form into the matrix.

2. A method of producing a granular material according to claim 1, characterised in that additives having an additional absorptive and/or adsorptive effect are added, before the reconversion to carbonate, during the mixing of the fine particulate carbonate starting materials with the alkaline earth hydroxide and water.

3. A method according to claim 2, characterised in that a granular material comprising alkaline earth carbonates and alkaline earth hydroxide is first formed, and in a second step a layer comprising alkaline earth carbonate, alkaline earth hydroxide and absorption- or adsorption-promoting additives is deposited round this core and is subsequently reconverted to carbonate.

4. A method according to claim 2 or 3, characterised in that the hardness of the granules is adjusted.

5. The use of the granular material according to claim 1 for the purpose of cleaning gas and waste gas.

6. The use of the granular material according to claim 1 for water treatment.

## Revendications

1. Granulé à base de carbonates de métaux alcalino-terreux associé à un agent liant, qui se forme par recarbonatation d'hydroxyde de métal alcalino-terreux,
caractérisé en ce qu'
en ce qui concerne les substances organiques comme la dioxine et les furannes ainsi que les métaux lourds, des additifs, qui agissent comme adsorbants et/ou absorbants, sont inclus sous forme finement divisée dans la matrice.

2. Procédé de préparation d'un granulé selon la revendication 1,
caractérisé en ce qu'
avant la recarbonatation par mélange des matières premières carbonatées en grains fins, avec l'hydroxyde de métal alcalino-terreux et de l'eau, on ajoute des additifs à action absorbante et/ou adsorbante.

3. Procédé selon la revendication 2,
caractérisé en ce qu'
en premier lieu, un granulé à base de carbonates de métal alcalino-terreux est moulé et que, dans une deuxième étape, autour de ce noyau on applique une couche à base de carbonate de métal alcalino-terreux, d'hydroxyde de métal alcalino-terreux et d'additifs qui favorisent l'absorption ou l'adsorption et qu'ensuite on recarbonate.

4. Procédé selon la revendication 2 ou la revendication 3,
caractérisé en ce que
la dureté des grenailles est ajustée.

5. Utilisation du granulé selon la revendication 1, aux fins de l'épuration des gaz et des gaz de combustion

6. Utilisation du granulé selon la revendication 1 pour le traitement de l'eau.
